# EUROPEAN PATENT SPECIFICATION

(11) **EP 2 182 187 B1**
(45) Date of publication and mention of the grant of the patent: **08.08.2012**
(21) Application number: 09252531.0
(22) Date of filing: 30.10.2009
(51) Int. Cl.: F01N 3/023, F01N 3/035, F01N 9/00

(54) **Exhaust gas purification system for internal combustion engine and exhaust gas purification method**
Abgasreinigungssystem für Verbrennungsmotor und Abgasreinigungsverfahren
Système de purification de gaz d'échappement pour moteur à combustion interne et procédé de purification de gaz d'échappement

(30) Priority: 30.10.2008 JP 2008279860
(43) Date of publication of application: 05.05.2010
(73) Proprietor: TOYOTA JIDOSHA KABUSHIKI KAISHA, Toyota-shi Aichi 471-8571 (JP)
(72) Inventor: Miyazaki, Masataka, Toyota-shi Aichi-ken, 471-8571 (JP); Fujita, Keimei, Toyota-shi Aichi-ken, 471-8571 (JP); Hoshimiya, Atsushi, Toyota-shi Aichi-ken, 471-8571 (JP)
(74) Representative: Smith, Samuel Leonard

(56) References cited:
- EP-A1- 1 431 530
- EP-A2- 1 517 029
- US-A1- 2002 078 681
- US-A1- 2004 244 362

## Description

### BACKGROUND OF THE INVENTION

### 1. Field of the Invention

The present invention relates to an exhaust gas purification system that purifies exhaust gas in an internal combustion engine. More specifically, the present invention relates to an exhaust gas purification system for an internal combustion engine that purifies exhaust gas in a diesel engine with use of a particulate filter, and to an exhaust gas purification method.

### 2. Description of the Related Art

An internal combustion engine, such as a gasoline engine and a diesel engine, discharges exhaust gas when the engine is running. The exhaust gas contains pollutants that should not be directly discharged to the atmosphere. Particularly, the exhaust gas from the diesel engine contains a particulate matter whose principal component is carbon (hereinafter sometimes referred to as PM), soot, soluble organic fraction (SOF), and so forth. These emissions can cause air pollution.

A known exhaust gas purification system for a diesel engine uses a particulate filter to purify PM that is contained in the exhaust gas. The particulate filter is provided in an exhaust passage of the diesel engine. When the exhaust gas flows through the exhaust passage, the particular filter traps PM that is contained in the exhaust gas to reduce an amount of PM emissions to the atmosphere. For example, a diesel particulate filter (DPF) or a diesel particulate-NOₓ reduction system (DPNR) catalyst is used as a particulate filter.

As a deposition amount of PM that is trapped in the particulate filter increases, the particulate filter begins clogged with the PM deposits. This increases pressure loss of the exhaust gas that flows through the particulate filter. With such pressure loss of the exhaust gas, engine exhaust backpressure increases to cause reductions in engine power output and fuel economy.

A conventional approach to solve the forgoing problems, such as disclosed in US-A1-2002/078681, EP-A2-1517029 and EP-A1-1431530, is to increase a temperature of the exhaust gas, when the amount of PM that is trapped in the particulate filter (PM deposition amount) reaches a specified amount, in order to increase a catalyst bed temperature. Thereby, the PM deposits on the particulate filter are oxidized (burned) to regenerate the particulate filter.

The amount of PM deposits on the particulate filter is estimated for such a filter regeneration control. When the estimated PM deposition amount reaches a specified amount, it is determined to start regeneration of the particulate filter, and the filter regeneration is executed (see Japanese Patent Application Publication No. 2004-019523 (JP-A-2004-019523), for example). More specifically, a differential pressure sensor is provided to detect a differential pressure between an upstream side and a downstream side of the particulate filter (a differential pressure of the exhaust gas before and after flowing through the particulate filter), for example. The PM deposition amount is estimated from an output signal of the differential pressure sensor. When this estimated PM deposition amount reaches determination value for start-up of the regeneration (a value that corresponds to a limit deposition amount), the filter regeneration control is started. The filter regeneration control is terminated when the estimated PM deposition amount is decreased to a determination value for the termination of the regeneration.

With the filter regeneration control in which the differential pressure of the exhaust gas before and after flowing through the filter is detected by the differential pressure sensor and in which the PM deposition amount is estimated from a detected value of the differential pressure, the related art cannot accurately estimate the PM deposition amount during the filter regeneration. In other words, the differential pressure sensor can accurately detect the differential pressure of the exhaust gas before and after flowing through the filter when the engine is in a normal combustion state. However, when the temperature of the exhaust gas is high during the filter regeneration, temperature drift (drift to the lower side of the detected differential pressure value) occurs in the differential pressure sensor. Accordingly, it is difficult to accurately detect the differential pressure of the exhaust gas before and after flowing through the filter.

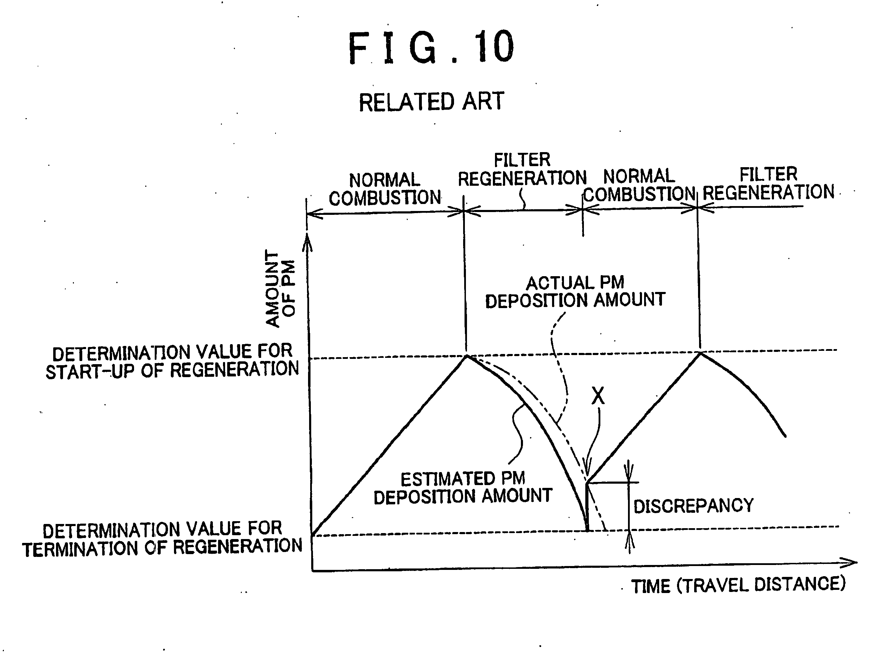

Therefore, for example, as shown in FIG. 10, before the actual amount of PM deposits (an actual PM deposition amount) reaches the determination value for the termination of the regeneration during the filter regeneration, the estimated PM deposition amount, which is based on an output of the differential pressure sensor, reaches the determination value for the termination of the regeneration. Consequently, a discrepancy arises between the actual PM deposition amount and the estimated PM deposition amount, thereby causing unburned PM. Under such a circumstance, the estimation of the PM deposition amount in the normal combustion state starts at the point X in FIG. 10 after the filter regeneration. More specifically, when a state is moved to the normal combustion state after the filter regeneration is terminated, the exhaust gas temperature decreases and the output of the differential pressure sensor returns to a normal value. Accordingly, since the estimated PM deposition amount that is based on the output of the differential sensor approximates the actual PM deposition amount, the estimation of the PM deposition amount starts at the point X.

If there is such a discrepancy between the estimated PM deposition amount and the actual PM deposition amount, a time period (interval) for the estimated PM deposition amount to reach the determination value for the start-up of the regeneration is shortened, thereby causing an increase in frequency of the filter regeneration and thus deterioration in fuel economy.

US-A1-2004/0244362, on which the precharacterizing portion of the independent claims is based, discloses basing the termination of the filter regeneration process on the integrated oxygen mass flow rate to the filter.

The present invention controls regeneration of a particulate filter at an appropriate timing with an exhaust gas purification system and an exhaust gas purification method in which a filter regeneration control is executed to oxidize and remove particulate matters (PM) deposited on the particulate filter, as defined in the appended claims.

The means for determining may calculate a second regeneration speed coefficient based on the air-fuel ratio of the exhaust gas and the exhaust gas flow rate, and multiply the regeneration speed that is obtained from the deposition amount of the particulate matters at the start-up of the filter regeneration by the first and second regeneration speed coefficients then obtain the estimated regeneration speed. In addition, the means for determining may calculate the reduced amount of the particulate matters that are deposited on the filter based on the estimated regeneration speed, calculate a remaining deposition amount of the particulate matters on the filter from the reduced amount, and terminate the filter regeneration when the remaining deposition amount of the particulate matters is reduced to a determination value for the termination of the regeneration.

Next, a principle of solving the problem by the present invention is described.

With the present invention, the termination of the filter regeneration is determined not based on a differential pressure of the exhaust gas before and after flowing through the filter, which is detected by a differential pressure sensor, but by utilizing the exhaust gas temperature, the air-fuel ratio of the exhaust gas, and the exhaust gas flow ratio. More specifically, the regeneration speed (PM reduction speed) during the filter regeneration is estimated to determine the termination of the filter regeneration. It should be noted here that the regeneration speed during the filter regeneration varies in accordance with an environmental condition of the filter. More specifically, when the exhaust gas temperature is not sufficiently increased at an initial stage of the filter regeneration, the regeneration speed is low. As the exhaust gas temperature rises, the regeneration speed increases. The regeneration speed is also related to the exhaust gas flow rate and the air-fuel ratio of the exhaust gas.

Considering the above, in the present invention, the filter regeneration speed is estimated in consideration of the exhaust gas temperature, the exhaust gas flow rate, and the air-fuel ratio of the exhaust gas, and the reduced amount of PM (filter regeneration amount) is calculated from the estimated regeneration speed. More specifically, as described above, the first regeneration speed coefficient is calculated from the exhaust gas temperature, and the second regeneration speed coefficient is calculated from the air-fuel ratio of the exhaust gas and the exhaust gas flow rate. Then, the regeneration speed, which is obtained from the deposition amount of particulate matters at the start-up of the filter regeneration, is multiplied by the first and second regeneration speed coefficients to calculate the estimated regeneration speed. The reduced amount of PM (filter regeneration amount) is obtained from the estimated regeneration speed to calculate an estimated PM deposition amount (remaining deposition amount) of the particulate matters.

With simulation calculations as described above, it is possible to reduce a discrepancy between the estimated PM deposition amount and an actual PM deposition amount during the filter regeneration, thereby allowing the termination of the filter regeneration at the appropriate timing. Accordingly, it is possible to prevent an increase in frequency of the filter regeneration and to further prevent deterioration in fuel economy.

The foregoing and further objects, features and advantages of the invention will become apparent from the following description of example embodiments with reference to the accompanying drawings, wherein like numerals are used to represent like elements and wherein:
FIG. 1 is a schematic diagram showing an example of a diesel engine to which the present invention is applied;
FIG. 2 is a block diagram of a configuration of a control system such as an ECU;
FIG. 3 is a map with which an estimated PM deposition amount PMa is obtained;
FIG. 4 is a map with which a PM formation amount pmb is obtained;
FIG. 5 is a map with which a regeneration speed coefficient "a" is obtained;
FIG. 6 is a map with which a regeneration speed coefficient "b" is obtained;
FIG. 7 is a map with which a regeneration speed is obtained;
FIG. 8 is a map with which an initial value PMd0 of the estimated PM deposition amount is obtained;
FIG. 9 is a timing chart that shows a change in the estimated PM amount PMa, which is a PM deposition amount during normal combustion that is estimated based on a differential pressure of exhaust gas before and after flowing through a filter, and that also shows a change in an estimated PM deposition amount PMd, which is an estimated PM amount during filter regeneration that is estimated based on the regeneration speed; and
FIG. 10 is a timing chart that shows a change in the estimated PM deposition amount during the normal combustion and the filter regeneration that is estimated based on the differential pressure of the exhaust gas before and after flowing through the filter.

### DETAILED DESCRIPTION OF EMBODIMENTS

The present invention will hereinafter be described with reference to the drawings.

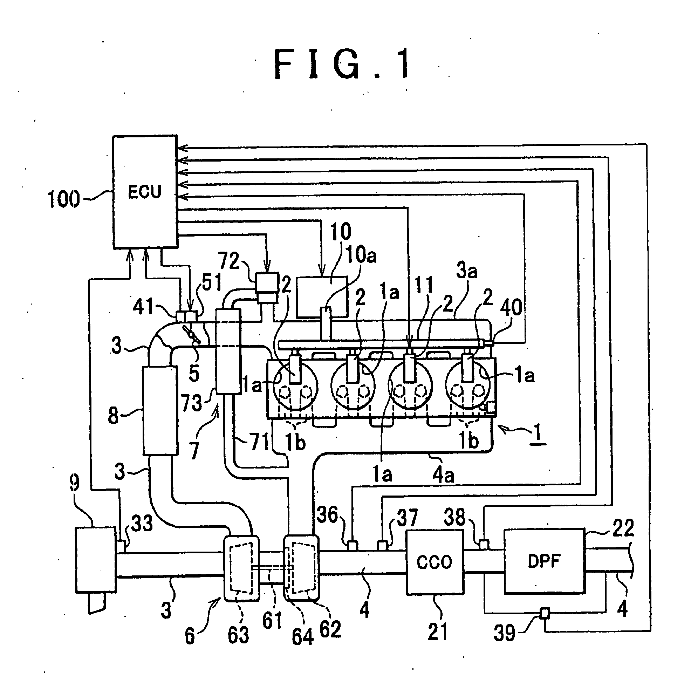

- Engine - A general construction of a diesel engine will be described with reference to FIG. 1.

A diesel engine 1 (hereinafter referred to as "engine 1") is a common rail in-cylinder direct-injection four-cylinder engine. An injector (a fuel injection valve) 2 is disposed in a combustion chamber la of each cylinder in the engine 1 to inject fuel to be burned in the combustion chamber la. The injector 2 of each cylinder is connected to a common rail 11. The common rail 11 is connected to a fuel supply pump 10.

The fuel supply pump 10 draws fuel from a fuel tank and pressurizes the fuel to supply the high-pressure fuel to the common rail 11 through a fuel passage 10a. The common rail 11 serves as an accumulator that maintains the pressure of fuel that is supplied from the fuel supply pump 10 at a specified level (accumulates the high-pressure fuel that is supplied from the fuel supply pump 10). The common rail 11 distributes the accumulated fuel to each injector 2. The injector 2 is an electromagnetically driven valve that is designed to be open upon application of a specified voltage to spray fuel into the associated combustion chamber 1a. The opening/closing (a fuel injection amount and an injection timing) of the injector 2 is duty-controlled by an electronic control unit (ECU) 100.

The engine 1 connects to an intake passage 3 and an exhaust passage 4. In the intake passage 3, an air cleaner 9, an airflow meter 33, a compressor impeller 63 of a turbocharger 6, an intercooler 8, and a throttle valve 5 are disposed in order from the upstream side to the downstream side in an intake air flow. The turbocharger 6 will be discussed later. An opening of the throttle valve 5 is controlled by a throttle motor 51. The throttle opening of the throttle valve 5 is detected by a throttle opening sensor 41. The intake passage 3 is branched at an intake manifold 3a, leading to the cylinders. The intake manifold 3a is located downstream of the throttle valve 5.

The exhaust passage 4 is branched at an exhaust manifold 4a and leads to the cylinders. The branches of the exhaust manifold 4a connect to the associated combustion chambers 1a of the cylinders of the engine 1, while converging into the exhaust passage 4.

In the exhaust passage 4, an oxidation catalytic converter (OCC) 21 and a DPF 22 are disposed in order. The OCC 21 is designed to oxidize and purify hydrocarbon (HC) and carbon monoxide (CO) that are contained in exhaust gas. The DPF 22 is designed to trap particulate matters (PM). Burning fuel in the combustion chambers 1a produces exhaust gas. The exhaust gas is delivered to the exhaust passage 4.

An air-fuel ratio sensor (A/F sensor) 36 and a first exhaust gas temperature sensor 37 are disposed in the exhaust passage 4 upstream of the OCC 21 in an exhaust gas flow. A temperature of the exhaust gas that enters the OCC 21 is detected from an output signal of the first exhaust gas temperature sensor 37. A second exhaust gas temperature sensor 38 is also disposed in the exhaust passage 4 between the OCC 21 and the DPF 22. A temperature of the exhaust gas that enters the DPF 22 (exhaust gas temperature Te) is detected from an output signal of the second exhaust gas temperature sensor 38. Furthermore, a differential pressure sensor 39 is disposed to detect a difference in pressure between the upstream side and the downstream side of the DPF 22.

The ECU 100 receives the output signals from the A/F sensor 36, the first exhaust gas temperature sensor 37; the second exhaust gas temperature sensor 38, and the differential pressure sensor 39.

The engine 1 is equipped with the turbocharger 6. The turbocharger 6 includes a turbine wheel 62 and the compressor impeller 63 that connect together through a rotor shaft 61.

The compressor impeller 63 is located facing the interior of the intake passage 3, while the turbine wheel 62 is located facing the interior of the exhaust passage 4. The turbocharger 6 thus constructed utilizes an exhaust flow (exhaust pressure) that is received by the turbine wheel 62 to rotate the compressor impeller 63 in order to force air into the engine. In this embodiment, the turbocharger 6 is a variable nozzle type turbocharger. The turbocharger 6 has a variable nozzle vane mechanism 64 on the side of the turbine wheel 62. Controlling the opening of the variable nozzle vane mechanism 64 allows for regulating the boost pressure of the engine 1. The intake air is heated due to the forced induction by the turbocharger 6. The intercooler 8 is located in the intake passage 3 and forcibly cools the heated intake air.

The engine 1 is equipped with an EGR system 7. The EGR system 7 is designed to recirculate part of the exhaust gas, which flows through the exhaust passage 4, to the intake passage 3, and to supply the part of the exhaust gas back to the combustion chambers 1a of the cylinders to lower the combustion temperature. This decreases an amount of NOₓ emissions. The EGR system 7 includes an EGR passage 71 that connects the intake manifold 3a to the exhaust manifold 4a. The EGR passage 71 is provided with an EGR cooler 73 and an EGR valve 72 in order from the upstream side in an EGR gas flow. The EGR cooler 73 is designed to cool EGR gas that flows (recirculates) through the EGR passage 71. Controlling the opening of the EGR valve 72 allows for adjusting the volume of the EGR gas (volume of the exhaust gas to be recirculated) to be introduced from the exhaust passage 4 (exhaust manifold 4a) to the intake passage 3 (intake manifold 3a).

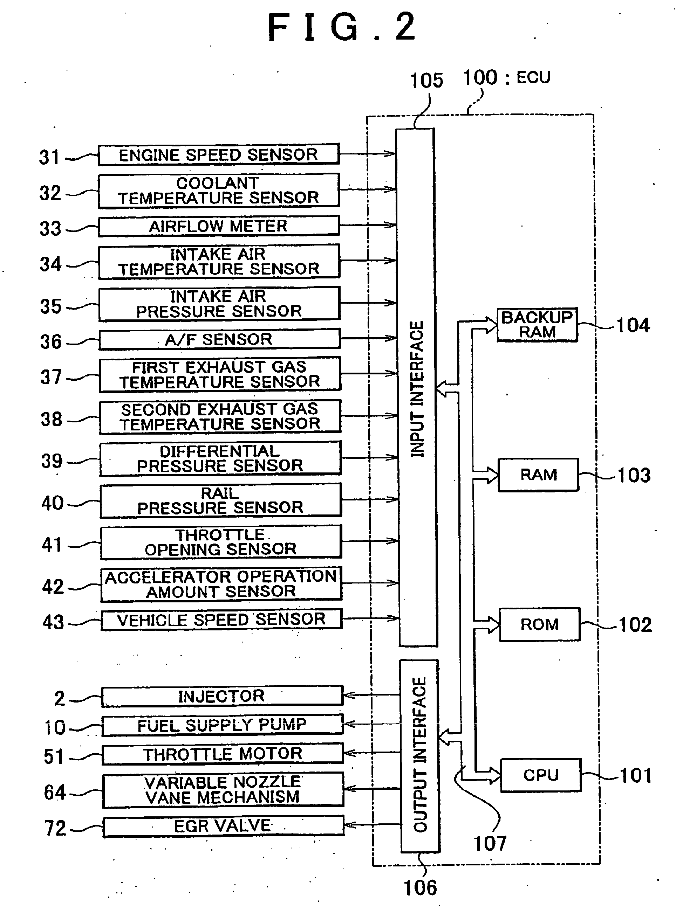

- ECU - As shown in FIG. 2, the ECU 100 includes a CPU 101, a ROM 102, a RAM 103, and a backup RAM 104.

The ROM 102 stores several control programs, maps to be used for executing these control programs, and other data. The CPU 101 executes operations in accordance with the respective control programs and maps that are stored in the ROM 102. The RAM 103 is a memory that temporarily stores the results of the operations in the CPU 101 and data that is received from the respective sensors. The backup RAM 104 is a nonvolatile memory that saves data to be stored upon power-off when the engine 1 stops.

The CPU 101, the ROM 102, the RAM 103, and the backup RAM 104 are connected to each other via a bus 107, while being connected to an input interface 105 and to an output interface 106.

The input interface 105 connects with: an engine speed sensor 31 that detects a revolving speed of a crankshaft, which is an output shaft of the engine 1; a water temperature sensor 32 that detects an engine water temperature (coolant temperature); the airflow meter 33; an intake air temperature sensor 34 that is disposed in the intake manifold 3a to detect an intake air temperature; an intake air pressure sensor 35 that is disposed in the intake manifold 3a to detect an intake air pressure; the A/F sensor 36; the first exhaust gas temperature sensor 37; the second exhaust gas temperature sensor 38; the differential pressure sensor 39; a rail pressure sensor 40 that detects pressure of high-pressure fuel in the common rail 11; the throttle opening sensor 41; an accelerator operation amount sensor 42; and a vehicle speed sensor 43. The ECU 100 receives output signals from these sensors.

The output interface 106 connects with the injectors 2, the fuel supply pump 10, the throttle motor 51 of the throttle valve 5, the variable nozzle vane mechanism 64 of the turbocharger 6, the EGR valve 72, and so forth.

The ECU 100 executes the several controls for the engine 1 based on the output signals of the aforementioned sensors. These controls include controlling the opening of the throttle valve 5 of the engine 1, and controlling the fuel injection amount and the injection timing (controlling the opening/closing of the injectors 2). Additionally, the ECU 100 executes a DPF regeneration control that will be discussed later.

The exhaust gas purification system is controlled in accordance with the programs that are executed by the ECU 100.

- DPF Regeneration Control - <Estimation of a PM deposition amount during normal combustion> The ECU 100 estimates the PM deposition amount during the normal combustion by two methods (1) and (2) discussed below.

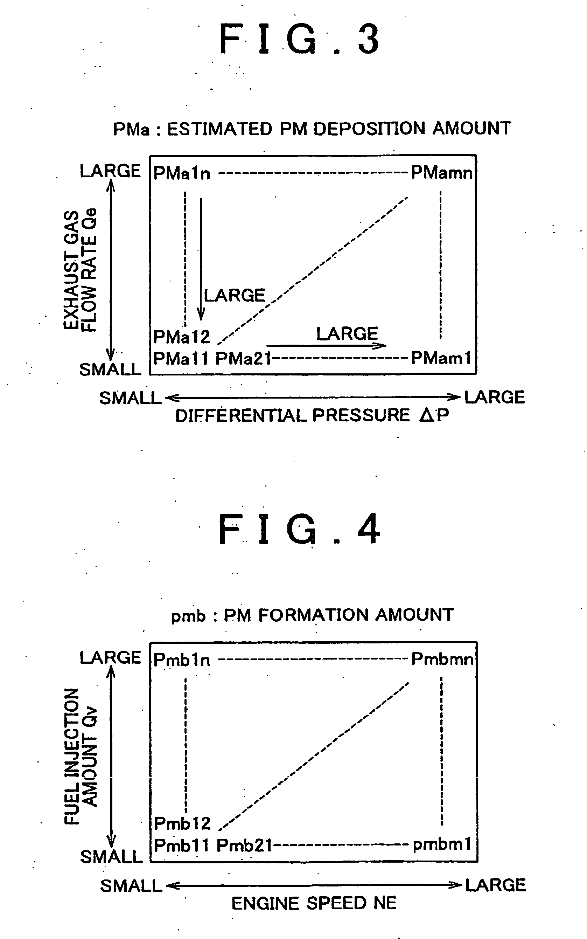

(1) Referring to the map in FIG. 3, the ECU 100 estimates an amount of PM deposits trapped in the DPF 22 based on an exhaust gas flow rate Qe and a differential pressure ΔP that is obtained from an output signal of the differential pressure sensor 39 provided in the DPF 22. The exhaust gas flow rate Qe is calculated based on an engine speed NE that is obtained from an output signal of the engine speed sensor 31, a fuel injection amount Qv (command value), and an intake air volume Pb that is obtained from an output signal of the airflow meter 33.

The map shown in FIG. 3 has the differential pressure ΔP and the exhaust gas flow rate Qe as parameters, is plotted with experimental and calculated values of the PM deposition amount (estimated PM deposition amount PMa) [g], and is stored in the ROM 102 of the ECU 100. The map in FIG. 3 is set such that the estimated PM deposition amount PMa increases as the differential pressure ΔP increases under the same condition of the exhaust gas flow rate Qe. Meanwhile, the map in FIG. 3 is also set such that the estimated PM deposition amount PMa increases as the exhaust gas flow rate Qe decreases under the same condition of the differential pressure ΔP. In case values of the differential pressure ΔP and the exhaust gas flow rate Qe are intermediate between the value points on the map of FIG. 3, the estimated PM deposition amount PMa is calculated by interpolation.

(2) Referring to the map in FIG. 4, the ECU 100 calculates a PM formation amount pmb based on the engine speed NE and the fuel injection amount Qv (command value), and accumulates the PM formation amount pmb in order to estimate the PM deposition amount (estimated PM deposition amount PMb).

The map shown in FIG. 4 has the engine speed NE and the fuel injection amount Qv as parameters, is plotted with experimental and calculated values of the PM formation amount pmb [g/s], and is stored in the ROM 102 of the ECU 100. In case values of the engine speed NE and the fuel injection amount Qv are intermediate between the value points on the map of FIG. 4, the PM formation amount pmb is calculated by interpolation.

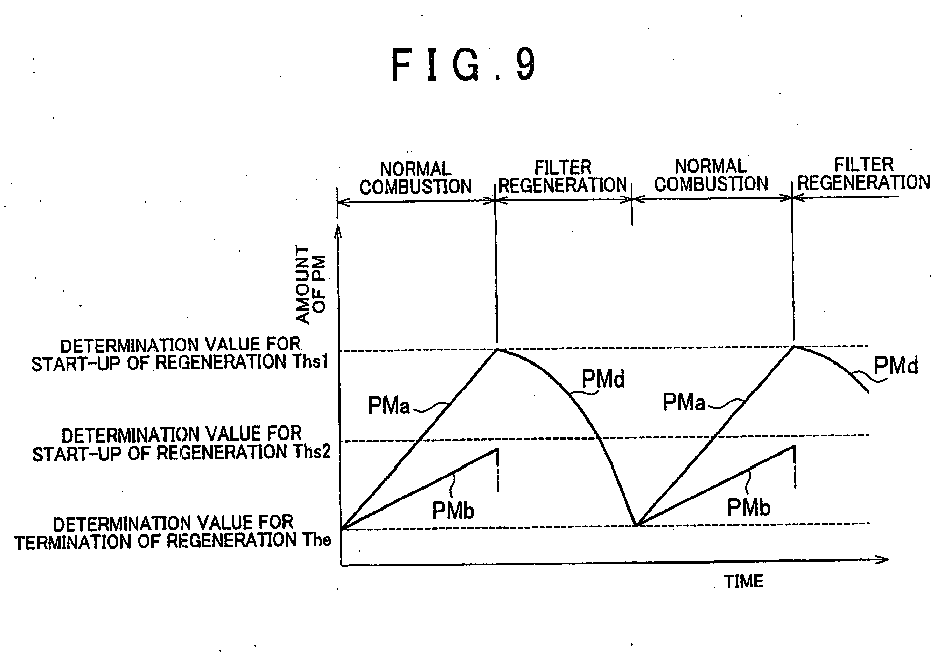

<Filter regeneration (DPF regeneration) process> The ECU 100 estimates the PM deposition amount (estimated PM deposition amounts PMa and PMb) by the aforementioned processes (1) and (2) during the normal combustion of the engine 1. These estimated PM deposition amounts PMa and PMb increase with time. The ECU 100 determines whether or not the estimated PM deposition amount PMa increases to a determination value for the start-up of the regeneration Ths1 and also determines whether or not the estimated PM deposition amount PMb increases to a determination value for the start-up of the regeneration Ths2 (see FIG. 9). When either one of the estimated PM deposition amounts PMa and PMb reaches the determination value for the start-up of the regeneration, the ECU 100 determines to start the regeneration of the DPF 22.

For example, as shown in FIG. 9, it is determined to start the regeneration of the DPF 22 at the moment that the estimated PM deposition amount PMa first reaches the determination value for the start-up of the regeneration Ths1. Then, the PM deposits on the DPF 22 are burned and removed to regenerate the DPF 22. More specifically, the primary fuel injection (main injection), that is, fuel injection for the engine operation (the fuel is sprayed by the injectors 2 to the associated combustion chambers 1a) is performed, and subsequently, post fuel injection is performed. The fuel that is sprayed by the injectors 2 during the post fuel injection is delivered through the exhaust passage 4 to the OCC 21. When the fuel reaches the OCC 21, HC, CO and other components in the exhaust gas are oxidized and reacted with the OCC 21. This oxidative reaction generates heat, and the heat causes the temperature rise of the OCC 21 (exhaust gas). Such a temperature rise causes the temperature rise of the DPF 22. With the temperature increase of the DPF 22 as mentioned above, the PM deposits on the DPF 22 is burned and removed. Thus, the PM deposition amount on the DPF 22 is reduced. The post fuel injection during the filter regeneration may be performed more than once.

<Estimation of the PM deposition amount during filter regeneration> In this example, a description will first be made on calculations of regeneration speed coefficients "a" and "b" that are used to estimate the PM deposition amount (remaining PM deposition amount) during the filter regeneration.

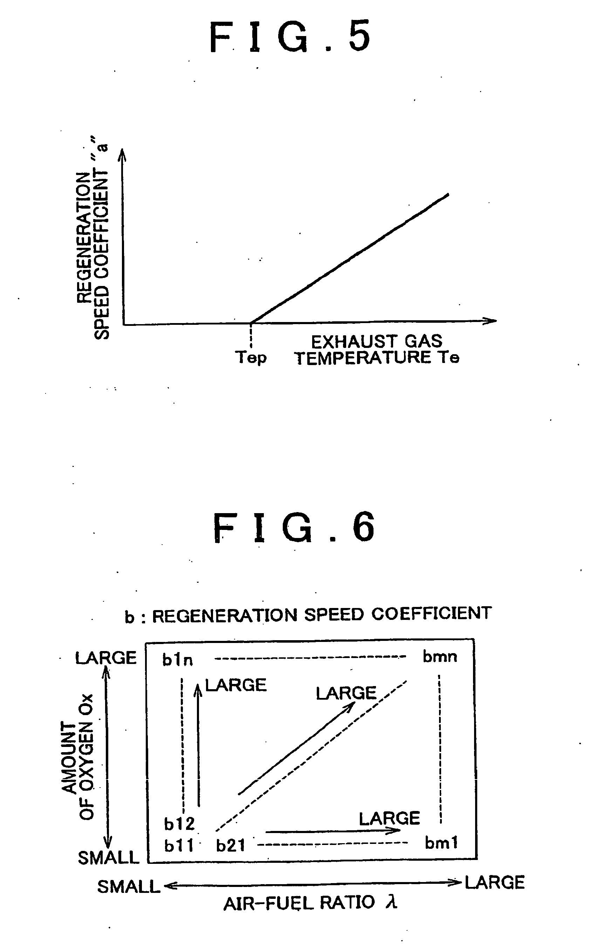

[Regeneration speed coefficient "a"] Referring to the map in FIG. 5, the ECU 100 calculates the regeneration speed coefficient "a" based on an exhaust gas temperature Te that is obtained from an output signal of the second exhaust gas temperature sensor 38. The calculation of the regeneration speed coefficient "a" is repeatedly executed per given cycle from the time when the filter regeneration is started. An execution period of the calculation of the regeneration speed coefficient "a" is from the start-up of the filter regeneration to the termination of the filter regeneration.

The map shown in FIG. 5 has the exhaust gas temperature Te as a parameter, is plotted with experimental and calculated values of the regeneration speed coefficient "a" that are appropriately adjusted in consideration with ease of the filter regeneration, and is stored in the ROM 102 of the ECU 100. In the map shown in FIG. 5, the regeneration speed coefficient "a" is set "0" in a range between the low temperature side and Tep of the exhaust gas temperature Te. The regeneration speed coefficient "a" is set to increase with a change (increase) in the exhaust gas temperature Te in a range beyond TeP. The point TeP where the regeneration speed coefficient "a" appears in the map of FIG. 5 is set in consideration with a PM regeneration start-up temperature.

[Regeneration speed coefficient "b"] Referring to a map, the ECU 100 first calculates the exhaust gas flow rate Qe based on the engine speed NE, the fuel injection amount Qv (command value), and the intake air volume Pb. The engine speed NE is calculated from the output signal of the engine speed sensor 31. The intake air volume Pb is calculated from the output signal of the airflow meter 33. The ECU 100 then calculates an amount of oxygen Ox in the exhaust gas based on the exhaust gas flow rate Qe and an air-fuel ratio λ that is calculated from an output signal of the A/F sensor 36.

Referring to the map in FIG. 6, the ECU 100 calculates the regeneration speed coefficient "b" based on the air-fuel ratio λ, which is obtained from the output signal of the A/F sensor 36, and the amount of oxygen Ox. Like the regeneration speed coefficient "a", the calculation of the regeneration speed coefficient "b" is repeatedly executed per given cycle from the time when the filter regeneration is started. An execution period of the calculation of the regeneration speed coefficient "b" is also from the start-up of the filter regeneration to the termination of the filter regeneration.

The map shown in FIG. 6 has the air-fuel ratio λ and the amount of oxygen Ox of the exhaust gas as parameters, is plotted with experimental and calculated values of the regeneration speed coefficient "b" that are appropriately adjusted in consideration with ease of the filter regeneration, and is stored in the ROM 102 of the ECU 100. In the map of FIG. 6, the regeneration speed coefficient "b" is set to increase as the air-fuel ratio λ and the amount of oxygen Ox increase. In case that values of the air-fuel ratio λ and the amount of oxygen Ox are intermediate between the value points on the map of FIG. 3, the estimated PM deposition amount PMa is calculated by interpolation.

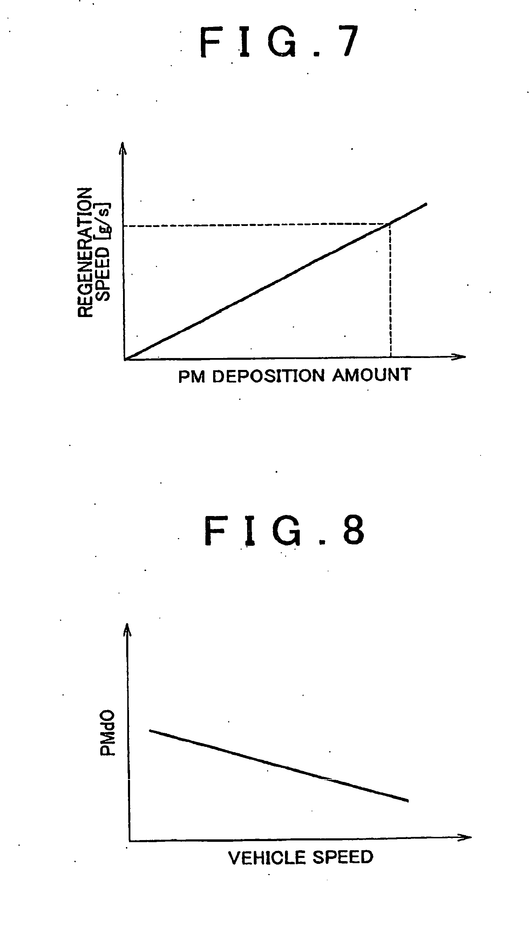

[Estimation of the PM deposition amount] Referring to the map in FIG. 7, the ECU 100 calculates a regeneration speed (PM reduction speed [g/s]) SO by utilizing an estimated PM deposition amount PMa0 (that corresponds to the determination value for the start-up of the regeneration Ths) at the start-up of the filter regeneration. Then, the ECU 100 multiplies the regeneration speed SO by the aforementioned regeneration speed coefficients "a" and "b" to calculate an estimated regeneration speed Sa [Sa (g/s) = S0 × "a" × "b"]. The calculation of the estimated regeneration speed Sa ([Sa ← Sa × "a" × "b"] from the second time onward) is according to this invention repeatedly executed per given cycle from the time when the filter regeneration is started. Then, the ECU 100 calculates a reduced amount (filter regeneration amount/ PM reduced amount) Dpm of particulate matters trapped on the filter by multiplying the estimated regeneration speed Sa that is calculated per the given cycle by an interval (time period) of the calculation.

Then, the ECU 100 sequentially calculates an estimated PM deposition amount (PM remaining amount) PMd during the filter regeneration by utilizing the reduced amount Dpm [PMd ← PMd - Dpm]. The filter regeneration process is terminated when the estimated PM deposition amount PMd reaches a determination value for the termination of the regeneration The (see FIG. 9). An execution period of the estimation process of such a PM deposition amount PMd is from the start-up of the filter regeneration to the termination of the filter regeneration. An initial value of the estimated PM deposition amount PMd during the filter regeneration is set to be an estimated PM deposition amount PMa0 at the start-up of the filter regeneration.

With the simulation calculations as described above, it is possible to accurately calculate the estimated PM deposition amount during the filter regeneration and to inhibit a discrepancy between the estimated PM deposition amount and the actual PM deposition amount (for example, there is a decrease in a discrepancy between the actual PM deposition amount shown in a double-dashed line in FIG. 10 and the estimated PM deposition amount PMa obtained by the simulation calculations). Accordingly, it is possible to eliminate unburned PM when the filter regeneration is terminated, and it is also possible to terminate the filter regeneration at an appropriate timing. Consequently, it is possible to prevent an increase in frequency of the filter regeneration and to further prevent deterioration in fuel economy.

Unlike the differential pressure sensor 39, the A/F sensor 36 and the second exhaust gas temperature sensor 38 do not produce the temperature drift even when the exhaust gas temperature rises during the filter regeneration, and thus can accurately detect the air-fuel ratio λ and the exhaust gas temperature Te.

In the above embodiment, the initial value PMd0 of the estimated PM deposition amount PMd during the filter regeneration may be a constant value or a variable that changes in accordance with the running state of a vehicle or the operating state of the engine 1. For example, compared to a case where the vehicle, speed is low, the exhaust gas temperature Te is high at a high vehicle speed. Thus, the regeneration of the DPF 22 is facilitated. In consideration of the above point, the initial value PMd0 of the estimated PM deposition amount may be set variable in accordance with the vehicle speed with use of the map shown in FIG. 8. In addition, in accordance with the exhaust gas flow rate, the initial value PMd0 of the estimated PM deposition amount may be set to increase as the exhaust gas flow rate decreases.

It is possible to increase the accuracy to determine the termination of the regeneration as the determination value for the termination of the regeneration The approaches "0". The determination value for the termination of the regeneration The is set relative to the estimated PM deposition amount PMd during the filter regeneration. However, when the determination value for the termination of the regeneration The approaches too close to "0", the time period of the filter regeneration is prolonged, thereby causing deterioration in fuel economy. Therefore, in consideration of such determination accuracy and fuel economy, a value that is appropriately adjusted by an experiment and calculation is set to be the determination value for the termination of the regeneration The.

- As a method to estimate the PM deposition amount during the normal combustion, the system adopts a method of estimating the PM deposition amount from the output signal of the differential pressure sensor 39 and a method of estimating the PM deposition amount by calculating the PM formation amount from the map based on the operating state of the engine 1 (the engine speed NE and the fuel injection amount) and then accumulating the PM formation amount. However, the present invention is not limited to the above methods and may only adopt either one of the above two methods of estimating the PM deposition amount.

As a method of estimating the PM deposition amount during the normal combustion, an alternative method may be adopted such as one in which the PM deposition amount is estimated on the basis of a driving distance or driving time of the vehicle. Furthermore, the alternative method and at least one of the above two methods of estimating the PM deposition amount may be adopted jointly. Of the plural methods of estimating, it may be set to execute the DPF regeneration control when the PM deposition amount in one of the methods reaches the determination value for the start-up of the regeneration.

In the above embodiment, the filter regeneration is executed by the post injection after the main fuel injection. However, the present invention is not limited to the above method. The filter regeneration may be executed by adding fuel from a fuel addition valve to the exhaust passage (the exhaust manifold 4a, for example) upstream of the DPF 22. The filter regeneration may be executed by the combination of the post injection and the fuel addition.

In the above embodiments, the DPF is used as a particulate filter. The present invention is not limited to the DPF, and may also be applied to an exhaust gas purification system that uses a DPNR catalyst.

In the above embodiment, the exhaust gas purification system of the present invention is applied to the in-cylinder direct-injection four-cylinder diesel engine. However, the present invention is not limited to this type of diesel engine. Alternatively, the exhaust gas purification system of the present invention may be applied to other diesel engines that have any number of cylinders, such as in-cylinder direct-injection six-cylinder diesel engine. Further alternatively, the exhaust gas purification system of the present invention may be applied to lean bum gasoline engines that operate predominantly in lean burn operating mode in which an air-fuel mixture with a high air-fuel ratio (lean mixture) burns. Still further, the present invention may be intended not only for vehicle engines, but also for engines that are designed for other purposes.

## Claims

1. An exhaust gas purification system for an internal combustion engine (1) including: a filter (22) to be disposed in an exhaust passage (4) of an internal combustion engine (1) to trap particulate matters in exhaust gas; means for starting filter regeneration (100) that starts the filter regeneration to remove the particulate matters deposited on the filter (22) when an amount of the particulate matters deposited on the filter (22) reaches a determination value (Ths 1, Ths 2) for start-up of the filter regeneration;
means for determining termination of the filter regeneration (100) configured to estimate a filter regeneration speed (Sa) based on the exhaust gas temperature (Te), the air-fuel ratio (d) of the exhaust gas, and the exhaust gas flow rate (Qe) of the internal combustion engine (1), to calculate a reduced amount (Dpm) of the particulate matters deposited on the filter (22) from the regeneration speed (Sa) that is estimated, and to determine to terminate the filter regeneration based on the reduced amount (Dpm) of the particulate matters;
**characterised in that**:
the filter regeneration speed (Sa) is estimated based on first regeneration speed coefficient (a) calculated from an exhaust gas temperature (Te), the calculation being repeatedly executed per given cycle.

2. The exhaust gas purification system according to claim 1 wherein the calculation of the first regeneration speed coefficient (a) is repeatedly executed per given cycle from the time when the filter regeneration is started until termination of filter regeneration.

3. The exhaust gas purification system according to claim 1 or 2 wherein the means for determining is configured to calculate a second regeneration speed coefficient (b) based on the air-fuel ratio (d) of the exhaust gas and the exhaust gas flow rate (Qe), and to multiply the regeneration speed (S0) that is obtained from a deposition amount (PmA0) of the particulate matters at start-up of the regeneration by the first and second regeneration speed coefficients (a, b) then obtains the estimated regeneration speed (Sa).

4. The exhaust gas purification system according to claim 3 wherein the first regeneration speed coefficient (a) is set to increase as the exhaust gas temperature (Te) increases.

5. The exhaust gas purification system according to claim 3 or 4 wherein the second regeneration speed coefficient (b) is set to increase as an amount of oxygen in the exhaust gas that is calculated based on the air-fuel ratio (d) of the exhaust gas and the exhaust gas flow rate (Qe) increases.

6. The exhaust gas purification system according to any one of claims 1 to 5 wherein the means for determining (100) is configured to calculate a remaining deposition amount (PMd) of the particulate matters that remain on the filter (22) based on the reduced amount (Dpm) of the particulate matters, and to terminate the filter regeneration when the remaining deposition amount (PMd) of the particulate matters is reduced to a determination value (The) for termination of the regeneration.

7. The exhaust gas purification system according to any preceding claim wherein the filter (22) is disposed in the exhaust passage (4) of the internal combustion engine (1).

8. The exhaust gas purification system according to any one of the preceding claims wherein the start-up of the filter regeneration is based on comparison of a first particulate matter deposition amount (PMa) estimated based on an exhaust gas flow rate (Qe) and a differential pressure (ΔP) across the filter (22) with a first determination value (Ths1), and on comparison of a second particulate matter deposition amount (PMb), estimated by accumulation of a particulate matter formation amount (PMb) calculated from the engine speed (NE) and fuel injection amount (Qᵥ), with a second determination value (Ths2).

9. An exhaust gas purification method for an internal combustion engine (1) having a filter (22) that is disposed in an exhaust passage (4) and traps particulate matters in exhaust gas, the exhaust gas purification method comprising:
starting filter regeneration to remove the particulate matters that are deposited on the filter (22) when a deposition amount of the particulate matters reaches a determination value (Ths1, Ths2) for start-up of the regeneration;
estimating a filter regeneration speed (Sa) based on the exhaust gas temperature (Te), the air-fuel ratio (d) of the exhaust gas, and the exhaust gas flow rate (Qe) of the internal combustion engine (1), to calculate a reduced amount (Dpm) of the particulate matters deposited on the filter (22) from the regeneration speed (Sa) that is estimated, and to determine to terminate the filter regeneration based on the reduced amount (Dpm) of the particulate matters;
**characterised in that**:
the filter regeneration speed (Sa) is estimated based on first regeneration speed coefficient (a) calculated from an exhaust gas temperature (Te), the calculation being repeatedly executed per given cycle.

10. The exhaust gas purification method according to claim 9 wherein the calculation of the first regeneration speed coefficient (a) is repeatedly executed per given cycle from the time when the filter regeneration is started until termination of filter regeneration.

11. The exhaust gas purification method according to claim 9 or 10 further comprising calculating a second regeneration speed coefficient (b) based on the air-fuel ratio (d) of the exhaust gas and the exhaust gas flow rate (Qe), to multiplying the regeneration speed (SO) that is obtained from a deposition amount (PmA0) of the particulate matters at start-up of the regeneration by the first and second regeneration speed coefficients (a, b) to obtain the estimated regeneration speed (Sa).

12. The exhaust gas purification method according to claim 11 wherein the first regeneration speed coefficient (a) is set to increase as the exhaust gas temperature (Te) increases.

13. The exhaust gas purification method according to claim 11 or 12 wherein the second regeneration speed coefficient (b) is set to increase as an amount of oxygen in the exhaust gas that is calculated based on the air-fuel ratio (d) of the exhaust gas and the exhaust gas flow rate (Qe) increases.

14. The exhaust gas purification method according to any one of claims 9 to 13 further comprising calculating a remaining deposition amount (PMd) of the particulate matters that remain on the filter (22) based on the reduced amount (Dpm) of the particulate matters, terminating the filter regeneration when the remaining deposition amount (PMd) of the particulate matters is reduced to a determination value (The) for termination of the regeneration.

15. The exhaust gas purification method according to any one of claims 9 to 14 wherein the start-up of the filter regeneration is based on comparison of a first particulate matter deposition amount (PMa) estimated based on an exhaust gas flow rate (Qe) and a differential pressure (ΔP) across the filter (22) with a first determination value (Ths1) and on comparison of a second particulate matter deposition amount (PMb), estimated by accumulation of a particulate matter formation amount (PMb) calculated from the engine speed (NE) and fuel injection amount (Qᵥ), with a second determination value (Ths2).

## Patentansprüche

1. Abgasreinigungssystem für eine Brennkraftmaschine (**1**), mit: einem Filter (**22**), der in einer Abgaspassage (**4**) einer Brennkraftmaschine (**1**) anzubringen ist, um in Abgas enthaltene Partikel einzufangen; einer Einrichtung zum Starten einer Filterregeneration (**100**), die die Filterregeneration zum Entfernen der sich auf dem Filter (**22**) abgelagerten Partikel startet, wenn eine Menge von den sich auf dem Filter (**22**) abgelagerten Partikeln einen Bestimmungswert (**Ths 1, Ths 2**) für ein Starten der Filterregeneration erreicht;
wobei eine Einrichtung zum Bestimmen einer Beendigung der Filterregeneration (**100**) eingerichtet ist, um eine Filterregenerationsgeschwindigkeit (**Sa**) basierend auf der Abgastemperatur (**Te**), dem Luft-Kraftstoff-Verhältnis (**d**) des Abgases und der Abgasdurchflussrate (**Qe**) der Brennkraftmaschine (**1**) abzuschätzen, um eine reduzierte Menge (**Dpm**) der sich auf dem Filter (**22**) abgelagerten Partikel aus der abgeschätzten Regenerationsgeschwindigkeit (**Sa**) zu berechnen, und zum Bestimmen, die Filterregeneration zu beenden, basierend auf der reduzierten Menge (**Dpm**) der Partikel;
**dadurch gekennzeichnet, dass**:
die Filterregenerationsgeschwindigkeit (**Sa**) basierend auf einem ersten Regenerationsgeschwindigkeitskoeffizienten (**a**) abgeschätzt wird, der aus einer Abgastemperatur (**Te**) berechnet wird, wobei die Berechnung wiederholt pro vorgegebenen Zyklus ausgeführt wird.

2. Abgasreinigungssystem gemäß Anspruch 1, wobei die Berechnung des ersten Regenerationsgeschwindigkeitskoeffizienten (**a**) wiederholt pro vorgegebenen Zyklus von dem Zeitpunkt, bei dem die Filterregeneration gestartet wird, bis zur Beendigung der Filterregeneration ausgeführt wird.

3. Abgasreinigungssystem gemäß Anspruch 1 oder 2, wobei die Einrichtung zum Bestimmen eingerichtet ist, um einen zweiten Regenerationsgeschwindigkeitskoeffizienten (**b**) basierend auf dem Luft-Kraftstoff-Verhältnis (**d**) des Abgases und der Abgasdurchflussrate (**Qe**) zu berechnen, und um die Regenerationsgeschwindigkeit (**S0**), die aus einer Ablagerungsmenge (**PmA0**) der Partikel bei Start der Regeneration erhalten wird, mit dem ersten und dem zweiten Regenerationsgeschwindigkeitskoeffizienten (**a, b**) zu multiplizieren, um dabei die abgeschätzte Regenerationsgeschwindigkeit (**Sa**) zu erhalten.

4. Abgasreinigungssystem gemäß Anspruch 3, wobei der erste Regenerationsgeschwindigkeitskoeffizient (**a**) eingestellt ist anzusteigen, wenn die Abgastemperatur (**Te**) ansteigt.

5. Abgasreinigungssystem gemäß Anspruch 3 oder 4, wobei der zweite Regenerationsgeschwindigkeitskoeffizient (**b**) eingestellt ist anzusteigen, wenn eine Sauerstoffmenge in dem Abgas, die basierend auf dem Luft-Kraftstoff-Verhältnis (**d**) des Abgases und der Abgasgasdurchflussrate (**Qe**) berechnet wird, ansteigt.

6. Abgasreinigungssystem gemäß einem der Anspruch 1 bis 5, wobei die Einrichtung zum Bestimmen (**100**) eingerichtet ist, um eine verbleibende Ablagerungsmenge (**PMd**) der Partikel, die auf dem Filter (**22**) verbleiben, basierend auf der reduzierten Menge (**Dpm**) der Partikel zu berechnen, und um die Filterregeneration zu beenden, wenn die verbleibende Ablagerungsmenge (**PMd**) der Partikel auf einen Bestimmungswert (**The**) zum Beenden der Regeneration reduziert wird.

7. Abgasreinigungssystem gemäß einem der vorhergehenden Ansprüche, wobei der Filter (**22**) in der Abgaspassage (**4**) der Brennkraftmaschine (**1**) angebracht ist.

8. Abgasreinigungssystem gemäß einem der vorgehenden Ansprüche, wobei der Start der Filterregeneration basierend auf einem Vergleich einer ersten Partikelablagerungsmenge (**PMa**), die basierend auf einer Abgasdurchflussrate (**Qe**) und einem Differentialdruck (Δ**P**) über den Filter (**22**) abgeschätzt wird, mit einem ersten Bestimmungswert (**Ths1**), und auf einem Vergleich einer zweiten Partikelablagerungsmenge (**PMb**), die durch Akkumulieren einer aus der Maschinendrehzahl (**NE**) und einer Kraftstoffeinspritzmenge (**Qᵥ**) berechneten Partikelbildungsmenge (**PMb**) abgeschätzt wird, mit einem zweiten Bestimmungswert (**Ths2**), basiert.

9. Abgasreinigungsverfahren für eine Brennkraftmaschine (**1**) mit einem Filter (**22**), der in einer Abgaspassage (**4**) angebracht ist und Partikel in Abgas einfängt, wobei das Abgasreinigungsverfahren aufweist:
Starten einer Filterregeneration zum Entfernen der sich auf dem Filter (**22**) abgelagerten Partikel, wenn eine Ablagerungsmenge der Partikel einen Bestimmungswert (**Ths1, Ths2**) für einen Start der Regeneration erreicht;
Abschätzen einer Filterregenerationsgeschwindigkeit (**Sa**) basierend auf der Abgastemperatur (**Te**), dem Luft-Kraftstoff-Verhältnis (**d**) des Abgases und der Abgasdurchflussrate (**Qe**) der Brennkraftmaschine (**1**), um eine reduzierte Menge (**Dpm**) der sich auf dem Filter (**22**) abgelagerten Partikel aus der abgeschätzten Regenerationsgeschwindigkeit (**Sa**) zu berechnen, und um zu bestimmen, die Filterregeneration zu beenden, basierend auf der reduzierten Menge (**Dpm**) der Partikel;
**dadurch gekennzeichnet, dass**
die Filterregenerationsgeschwindigkeit (**Sa**) basierend auf einem ersten Regenerationsgeschwindigkeitskoeffizienten (**a**), der aus einer Abgastemperatur (**Te**) berechnet wird, abgeschätzt wird, wobei die Berechnung wiederholt pro vorgegebenen Zyklus ausgeführt wird.

10. Abgasreinigungsverfahren gemäß Anspruch 9, wobei die Berechnung des ersten Regenerationsgeschwindigkeitskoeffizienten (**a**) wiederholt pro vorgegebenen Zyklus von dem Zeitpunkt, wenn die Filterregeneration gestartet wird, bis zur Beendigung der Filterregeneration ausgeführt wird.

11. Abgasreinigungsverfahren gemäß Anspruch 9 oder 10, weiterhin mit Berechnen eines zweiten Regenerationsgeschwindigkeitskoeffizienten (**b**) basierend auf dem Luft-Kraftstoff-Verhältnis (**d**) des Abgases und der Abgasdurchflussrate (**Qe**), um die Regenerationsgeschwindigkeit (**S0**), die aus der Ablagerungsmenge (**PmA0**) der Partikel bei Start der Regeneration erhalten wird, mit dem ersten und zweiten Regenerationsgeschwindigkeitskoeffizienten (**a, b**) zu multiplizieren, um die abgeschätzte Regenerationsgeschwindigkeit (**Sa**) zu erhalten.

12. Abgasreinigungsverfahren gemäß Anspruch 11, wobei der erste Regenerationsgeschwindigkeitskoeffizient (**a**) eingestellt ist anzusteigen, wenn die Abgastemperatur (**Te**) ansteigt.

13. Abgasreinigungsverfahren gemäß Anspruch 11 oder 12, wobei der zweite Regenerationsgeschwindigkeitskoeffizient (**b**) eingestellt ist anzusteigen, wenn eine Sauerstoffmenge in dem Abgas, die basierend auf dem Luft-Kraftstoff-Verhältnis (**d**) des Abgases und der Abgasdurchflussrate (**Qe**) berechnet wird, ansteigt.

14. Abgasreinigungsverfahren gemäß einem der Ansprüche 9 bis 13, weiterhin mit Berechnen einer verbleibenden Ablagerungsmenge (**PMb**) der Partikel, die auf dem Filter (**22**) verbleiben, basierend auf der reduzierten Menge (**Dpm**) der Partikel, Beenden der Filterregeneration, wenn die verbleibende Ablagerungsmenge (**PMd**) der Partikel auf einen Bestimmungswert (**The**) für eine Beendung der Regeneration reduziert wird.

15. Abgasreinigungsverfahren gemäß einem der Ansprüche 9 bis 14, wobei der Start der Filterregeneration basierend auf einem Vergleich einer ersten Partikelablagerungsmenge (**PMa**), die basierend auf einer Abgasdurchflussrate (**Qe**) und einem Differentialdruck (Δ**P**) über den Filter (**22**) abgeschätzt wird, mit einem ersten Bestimmungswert (**Ths1**), und auf einem Vergleich einer zweiten Partikelablagerungsmenge (**PMb**), die durch Akkumulieren einer aus der Maschinendrehzahl (**BE**) und einer Kraftstoffeinspritzmenge (**Qᵥ**) berechneten Partikelbildungsmenge (**PMb**) abgeschätzt wird, mit einem zweiten Bestimmungswert (**Ths2**), basiert.

## Revendications

1. Système de purification de gaz d'échappement pour un moteur à combustion interne (1) incluant : un filtre (22) à disposer dans un conduit d'échappement (4) d'un moteur à combustion interne (1) pour piéger des matières particulaires dans les gaz d'échappement ; un moyen apte à démarrer une régénération de filtre (100) qui démarre la régénération de filtre pour éliminer les matières particulaires déposées sur le filtre (22) lorsque la quantité des matières particulaires déposées sur le filtre (22) atteint une valeur déterminée (Ths 1, Ths 2) pour lancer la régénération de filtre ;
un moyen apte à déterminer la fin de la régénération de filtre (100) constitué pour estimer une vitesse de régénération de filtre (Sa) en se basant sur la température de gaz d'échappement (Te), le rapport air-carburant (d) des gaz d'échappement, et le débit de gaz d'échappement (Qe) du moteur à combustion interne (1), pour calculer une quantité réduite (Dpm) des matières particulaires déposées sur le filtre (22) à partir de la vitesse de régénération (Sa) qui est estimée, et pour déterminer de mettre fin à la régénération de filtre en se basant sur la quantité réduite (Dpm) des matières particulaires ;
**caractérisé en ce que** la vitesse de régénération de filtre (Sa) est estimée en se basant sur un premier coefficient de vitesse de régénération (a) calculé à partir d'une température de gaz d'échappement (Te), le calcul étant effectué de façon répétée par cycle donné.

2. Système de purification de gaz d'échappement selon la revendication 1, dans lequel le calcul du premier coefficient de vitesse de régénération (a) est effectué de façon répétée par cycle donné à partir du moment où la régénération de filtre est démarrée jusqu'à la fin de régénération de filtre.

3. Système de purification de gaz d'échappement selon la revendication 1 ou 2, dans lequel le moyen apte à déterminer est constitué pour calculer un second coefficient de vitesse de régénération (b) en se basant sur le rapport air-carburant (d) des gaz d'échappement et sur le débit de gaz d'échappement (Qe), et pour multiplier la vitesse de régénération (S0) qui est obtenue à partir d'une quantité de dépôt (PmA0) des matières particulaires au lancement de la régénération par les premier et second coefficients de vitesse de régénération (a, b) puis obtient la vitesse de régénération estimée (Sa).

4. Système de purification de gaz d'échappement selon la revendication 3, dans lequel le premier coefficient (a) de vitesse de régénération est paramétré pour augmenter à mesure que la température de gaz d'échappement (Te) augmente.

5. Système de purification de gaz d'échappement selon la revendication 3 ou 4, dans lequel le second coefficient de vitesse de régénération (b) est paramétré pour augmenter à mesure qu'augmente la quantité d'oxygène dans les gaz d'échappement qui est calculée en se basant sur le rapport air-carburant (d) des gaz d'échappement et sur le débit de gaz d'échappement (Qe).

6. Système de purification de gaz d'échappement selon l'une quelconque des revendications 1 à 5, dans lequel le moyen apte à déterminer (100) est constitué pour calculer une quantité de dépôt restante (PMd) des matières particulaires qui restent sur le filtre (22) en se basant sur la quantité réduite (Dpm) des matières particulaires, et pour mettre fin à la régénération de filtre lorsque la quantité de dépôt restante (PMd) des matières particulaires est réduite à une valeur déterminée (The) pour mettre fin à la régénération.

7. Système de purification de gaz d'échappement selon l'une quelconque des revendications précédentes, dans lequel le filtre (22) est disposé dans le conduit d'échappement (4) du moteur à combustion interne (1).

8. Système de purification de gaz d'échappement selon l'une quelconque des revendications précédentes, dans lequel le lancement de la régénération de filtre est basé sur une comparaison d'une première quantité de dépôt de matières particulaires (PMa) estimée en se basant sur un débit de gaz d'échappement (Qe) et sur une pression différentielle (ΔP) à travers le filtre (22) avec une première valeur déterminée (Ths1), et sur une comparaison d'une seconde quantité de dépôt de matières particulaires (PMb), estimée par le cumul d'une quantité de matières particulaires formées (PMb) calculée à partir de la vitesse de moteur (NE) et de la quantité de carburant injecté (Qᵥ), avec une seconde valeur déterminée (Ths2).

9. Procédé de purification de gaz d'échappement pour un moteur à combustion interne (1) ayant un filtre (22) qui est disposé dans un conduit d'échappement (4) et qui piège des matières particulaires dans les gaz d'échappement, le procédé de purification de gaz d'échappement comprenant :
le démarrage d'une régénération de filtre pour éliminer les matières particulaires qui sont déposées sur le filtre (22) lorsque la quantité déposée des matières particulaires atteint une valeur déterminée (Ths1, Ths2) pour lancer la régénération ;
l'estimation d'une vitesse de régénération de filtre (Sa) en se basant sur la température de gaz d'échappement (Te), le rapport air-carburant (d) des gaz d'échappement, et le débit de gaz d'échappement (Qe) du moteur à combustion interne (1), pour calculer une quantité réduite (Dpm) des matières particulaires déposées sur le filtre (22) à partir de la vitesse de régénération (Sa) qui est estimée, et pour déterminer de mettre fin à la régénération de filtre en se basant sur la quantité réduite (Dpm) des matières particulaires ;
**caractérisé en ce que** la vitesse de régénération de filtre (Sa) est estimée en se basant sur un premier coefficient de vitesse de régénération (a) calculé à partir d'une température de gaz d'échappement (Te), le calcul étant effectué de façon répétée par cycle donné.

10. Procédé de purification de gaz d'échappement selon la revendication 9, dans lequel le calcul du premier coefficient de vitesse de régénération (a) est effectué de façon répétée par cycle donné à partir du moment où la régénération de filtre est démarrée jusqu'à la fin de régénération de filtre.

11. Procédé de purification de gaz d'échappement selon la revendication 9 ou 10, comprenant en outre le calcul d'un second coefficient de vitesse de régénération (b) en se basant sur le rapport air-carburant (d) des gaz d'échappement et sur le débit de gaz d'échappement (Qe), pour multiplier la vitesse de régénération (SO) qui est obtenue à partir d'une quantité de dépôt (PmA0) des matières particulaires au lancement de la régénération par les premier et second coefficients de vitesse de régénération (a, b) pour obtenir la vitesse de régénération estimée (Sa).

12. Procédé de purification de gaz d'échappement selon la revendication 11, dans lequel le premier coefficient (a) de vitesse de régénération est paramétré pour augmenter à mesure que la température de gaz d'échappement (Te) augmente.

13. Procédé de purification de gaz d'échappement selon la revendication 11 ou 12, dans lequel le second coefficient de vitesse de régénération (b) est paramétré pour augmenter à mesure qu'augmente la quantité d'oxygène dans les gaz d'échappement qui est calculée en se basant sur le rapport air-carburant (d) des gaz d'échappement et sur le débit de gaz d'échappement (Qe).

14. Procédé de purification de gaz d'échappement selon l'une quelconque des revendications 9 à 13, comprenant en outre le calcul d'une quantité de dépôt restante (PMd) des matières particulaires qui restent sur le filtre (22) en se basant sur la quantité réduite (Dpm) des matières particulaires, l'arrêt de la régénération de filtre lorsque la quantité de dépôt restante (PMd) des matières particulaires est réduite à une valeur déterminée (The) pour mettre fin à la régénération.

15. Procédé de purification de gaz d'échappement selon l'une quelconque des revendications 9 à 14, dans lequel le lancement de la régénération de filtre est basé sur une comparaison d'une première quantité de dépôt de matières particulaires (PMa) estimée en se basant sur un débit de gaz d'échappement (Qe) et sur une pression différentielle (ΔP) à travers le filtre (22) avec une première valeur déterminée (Ths1), et sur une comparaison d'une seconde quantité de dépôt de matières particulaires (PMb), estimée par le cumul d'une quantité de matières particulaires formées (PMb) calculée à partir de la vitesse de moteur (NE) et de la quantité de carburant injecté (Qᵥ), avec une seconde valeur déterminée (Ths2).
